# EUROPEAN PATENT SPECIFICATION

(11) **EP 2 081 001 B1**
(45) Date of publication and mention of the grant of the patent: **17.12.2014**
(21) Application number: 08103023.1
(22) Date of filing: 27.03.2008
(51) Int. Cl.: G01G 21/28, G01G 5/00, G01G 19/44

(54) **Gasbag weight-measuring apparatus**
Gasbeutelgewichtmessvorrichtung
Appareil de mesure de poids avec un sac de gaz

(30) Priority: 18.01.2008 TW 97101903
(43) Date of publication of application: 22.07.2009
(73) Proprietor: Industrial Technology Research Institute, Chu-Tung, Hsinchu (TW)
(72) Inventor: Chou, Chih Chung, 520, Tianjhong Township, Changhua County (TW); Ho, Chan Hsiao, 307, Cyonglin Township, Hsinchu County (TW); Chuang, Bor Nian, 407, Situn District, Taichung City (TW); Hsieh, Jung Ya, 406, Beitun District, Taichung City (TW); Hsu, Chen Min, 300, East District, Hsinchu City (TW)
(74) Representative: 2K Patentanwälte Blasberg Kewitz & Reichel

(56) References cited:
- DE-A1- 3 834 497
- DE-A1- 19 620 376
- US-B1- 6 721 980

## Description

### BACKGROUND OF THE INVENTION

### (A) Field of the Invention

The present invention relates to a gasbag weight-measuring apparatus, and more particularly, to a gasbag weight-measuring apparatus with portable carrying advantage.

### (B) Description of the Related Art

Recently, there is increased widespread awareness of health as health protection information is discussed in mass media. In general, commercial medical instruments already provide some basic health parameters with very friendly operation interface. Obesity becomes a serious problem as eating, drinking, and working habits change, which not only alters the shape of the people but also causes chronic ailments. Consequently, body weight measuring has become one of the key indicators that can be frequently monitored to check one's health.

However, when one travels, the intermediate and final destinations many times do not have an accessible weight scale available. Virtually all of the presently available weight scales for home and office use are far too cumbersome to be carried along with other baggage and therefore the nervous tension which develops from not knowing one's body weight fluctuations heightens during the trip, which in many cases can ignite nervous appetites.

US 6,337,446 discloses a collapsible weighing scale that reduces to the smallest possible size for maximum portability and convenience. The collapsible weighing scale includes a platform having a plurality of interconnected support segments and a supporting structure connected to the platform. In one embodiment, a thin top platform is made from a plurality of connected segments and supported by two beams. These beams support the segments, transfer the load to the ground, and incorporate sensors to measure the weight. The platform segments collapse into a more compact shape while the support beams fold into place parallel to the segments, resulting in a significant reduction in the overall volume occupied by the fully deployed unit.

DE 196 20 376 A1 discloses a balance, which comprises a cushion-like weight-measuring body, wherein an encasement of the body is filled with a gel, a liquid or a gas. If a person to be weighed steps onto the weight-measuring device, a pressure is exerted onto the medium disposed within the encasement, and a downward expansion is prevented by the floor, on which the weight-measuring device is disposed, and a sidewards expansion is prevented by the encasement. The balance does not comprise gas-filling and gas-draining units.

DE 38 34 497 Al discloses a balance according to the preamble of claim 1 using a handpump to pump gas into a pressure vessel. A display device and the handpump are separate components which are not integrated into the weight-measuring device. In addition, the gas-draining unit is only a stopcock which has a slow gas-draining speed and is not controlled by a control unit.

US 6,721,980 B1 discloses a force optimization apparatus including a patient support surface and an interface pressure sensor. A support layer includes a support surface assembly configured to prevent pressure ulcers in bedridden patients. An air supply and the display unit are separated from the support surface assembly. Also, a vent valve used to vent chambers when appropriate cannot vent gas completely.

### SUMMARY OF THE INVENTION

It is an object of the present invention to provide an improved gasbag weight-measuring apparatus with portable carrying advantage, which solves the limitation of the weight-measuring at some specific locations.

This problem is solved by a gasbag weight-measuring apparatus with the features of claim 1. Further advantageous embodiments are the subject-matter of the dependent claims.

A gasbag weight-measuring apparatus according to this aspect of the present invention comprises a gasbag configured to place a sample and a tube-shaped member connected to the gasbag, wherein the tube-shaped member is configured to measure and display the weight data of the sample. According one embodiment of the present invention, the tube-shaped member comprises a gas-filling unit configured to pump gas into the gasbag, a gas-draining unit configured to drain the gas from the gasbag to the atmosphere, a pressure gauge configured to measure the pressure of the gasbag and generate a pressure signal, a control unit configured to calculate the weight of the sample from the pressure signal, and a display unit configured to display the weight data of the sample.

The gasbag weight-measuring apparatus uses the gas-filling unit to transfer gas into the gasbag to a predetermined pressure, and the sample is then placed on the gasbag. Subsequently, the pressure gauge senses the pressure difference of the gasbag generated by the weight of the sample, this pressure difference signal is then transmitted to the control unit to calculate the weight data of the sample, and the display shows the weight data of the sample.

### BRIEF DESCRIPTION OF THE DRAWINGS

The objectives and advantages of the present invention will become apparent upon reading the following description and upon reference to the accompanying drawings in which:

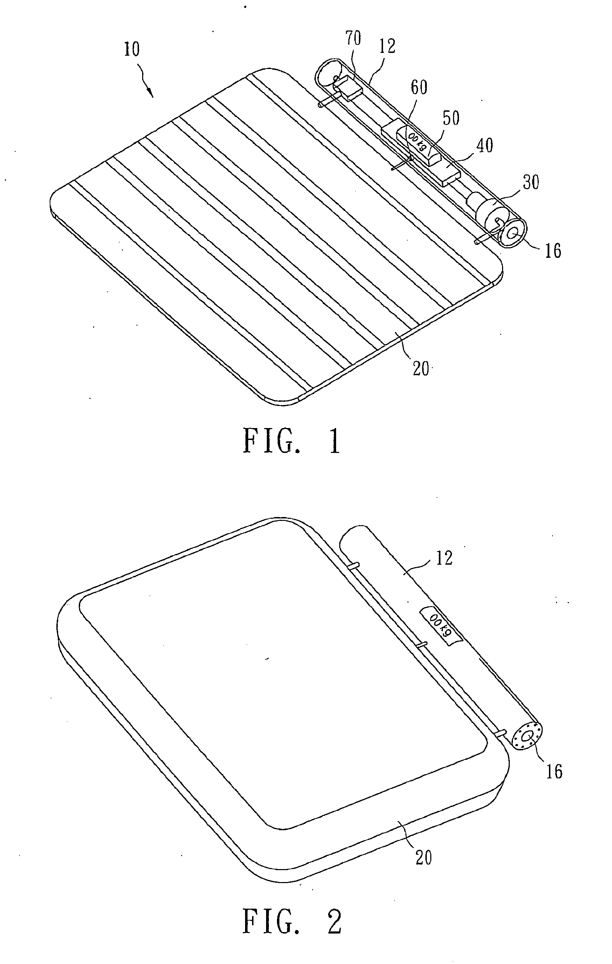

FIG. 1 to FIG. 4 illustrate a gasbag weight-measuring apparatus according to one embodiment of the present invention.

### DETAILED DESCRIPTION OF THE INVENTION

The making and using of the presently embodiments are discussed in detail below. The embodiments discussed are merely illustrative of specific ways to make and use the invention, and do not limit the scope of the invention that is determined by the claims.

FIG. 1 to FIG. 4 illustrate a gasbag weight-measuring apparatus 10 according to one embodiment of the present invention. The gasbag weight-measuring apparatus 10 comprises a gasbag 20 configured to support a sample 14 and a tube-shaped member 12 such as a cylinder connected to the gasbag 20, wherein the tube-shaped member 12 is configured to measure and display the weight data of the sample 14. According one embodiment of the present invention, the tube-shaped member 12 comprises a gas-filling unit 30 configured to pump gas into the gasbag 20, a gas-draining unit 70 configured to drain the gas from the gasbag 20 to the atmosphere, a pressure gauge 60 configured to measure the pressure of the gasbag 20 and generate a pressure signal, a control unit 40 configured to calculate the weight data of the sample 14 from the pressure signal of the pressure gauge 60, and a display 50 configured to display the weight data of the sample 14. The control unit 40 can be configured to control the operation of the gas-filling unit 30, the gas-draining unit 70, the pressure gauge 60 and the display 50. The display 50 can be a liquid display panel positioned on the tube-shaped member 12. In particular, the gasbag 20 can be thin and flat before pumping gas into the gasbag 20, as shown in FIG. 1.

When a switch 16 is pressed to activate the gasbag weight-measuring apparatus 10, the control unit 40 in the tube-shaped member 12 drives the gas-filling unit 30 such as a gas pump in the tube-shaped member 12 to transfer gas into the gasbag 20, the pressure gauge 60 in the tube-shaped member 12 senses the pressure in the gasbag 20 and transmits a pressure signal to the control unit 40 for subsequent signal processing, and the gas-draining unit 70 such as an electromagnetic valve or a gas-draining pump in the tube-shaped member 12 is turned off during this operation. When the pressure in the gasbag 20 sensed by the pressure gauge 60 reaches a predetermined value, the control unit 40 stops the gas-filling unit 30, as shown in FIG. 2.

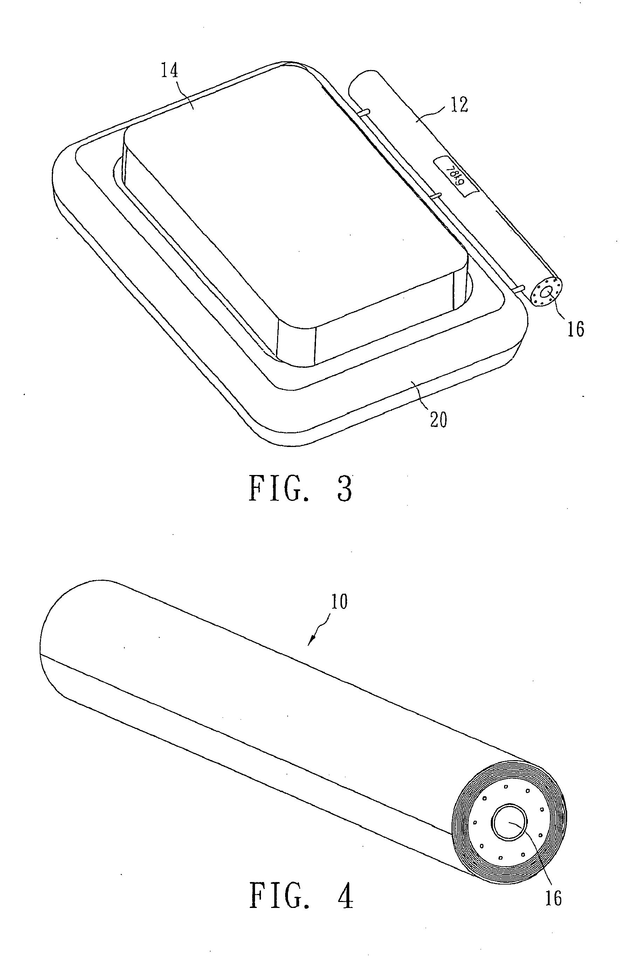

Referring to FIG. 3, when the pressure in the gasbag 20 reaches a predetermined value, the sample 14 can be placed on the gasbag 20. The placing of the sample 14 on the gasbag 20 generates a pressure variation of the gasbag 20, the pressure gauge 60 can sense the pressure variation value before and after the placing of the sample 14 on the gasbag 20, and this physical pressure variation value (pressure difference) is transformed into an electrical signal, which is then transmitted to a signal processor (not shown in the drawing) in the control unit 40. The electrical signal is processed to calculate the weight data of the sample 14, and the display 50 shows the weight data of the sample 14.

Referring to FIG. 4, the switch 16 is pressed again when the measurement is completed to activate the gas-draining unit 70, and the user can squeeze the gasbag 20 to drain the gas out of the gasbag 20 such that the gasbag 20 returns to its original shape, i.e., thin and flat. Consequently, the thin and flat gasbag 20 can be rolled up on the tube-shaped member 12 to reduce the overall size of the gasbag weight-measuring apparatus 10 to be portable.

The gasbag weight-measuring apparatus 10 uses the gas-filling unit 30 to transfer gas into the gasbag 20 to a predetermined pressure, and the sample 14 (human beings, animals or articles) is then placed on the gasbag 20. The pressure gauge 60 senses the pressure difference of the gasbag 20 generated by the weight of the sample 14, this pressure difference signal is then transmitted to the control unit 40 to calculate the weight data of the sample 14, and the display 50 shows the weight data of the sample 14.

It will be appreciated by those skilled in the art having the benefit of this disclosure that this invention provides an adjustable and versatile weight-measurement apparatus having numerous uses and applications. It should be understood that the drawings and detailed description herein are to be regarded in an illustrative rather than a restrictive manner, and are not intended to limit the invention to the particular forms and examples disclosed.

## Claims

1. A gasbag weight-measuring apparatus, comprising:
a gasbag (20) which is thin and flat, configured to place or support a sample (14) and can be filled with a gas;
a pressure gauge (60) configured to measure the pressure of the gasbag and generate a pressure signal;
a control unit (40) configured to calculate the weight data of the sample from the pressure signal; and
a display (50) configured to display the weight data of the sample;
wherein a tube-shaped member (12) is connected to the gasbag, which is configured to measure and display the weight data of the sample (14);
**characterized in that** said gasbag weight-measuring apparatus further comprises a gas-filling unit (30) configured to pump said gas into the gasbag, a gas-draining unit (70) configured to drain the gas from the gasbag (20) to the atmosphere and a switch (16) for activating the gasbag weight-measuring apparatus, wherein
said gas-filling unit (30), said gas-draining unit (70), said pressure gauge (60), said control unit (40) and said display (50) are positioned inside the tube-shaped member (12), and
wherein said control unit is configured to control the operation of the gas-filling unit, the gas-draining unit, the pressure gauge and the display by pressing said switch.

2. The gasbag weight-measuring apparatus of Claim 1, wherein the gas-filling unit is a gas pump.

3. The gasbag weight-measuring apparatus of any of the preceding claims, wherein the gas-draining unit is an electromagnetic valve.

4. The gasbag weight-measuring apparatus of any of the preceding claims, wherein the pressure gauge is configured to measure a pressure difference generated by placing the sample on the gasbag.

5. The gasbag weight-measuring apparatus of any of the preceding claims, wherein the display is a liquid display panel.

6. The gasbag weight-measuring apparatus of any of the preceding claims, wherein the tube-shaped member (12) is a cylinder.

7. The gasbag weight-measuring apparatus of any of the preceding claims, wherein the gasbag is configured to be rollable on the tube-shaped member.

8. The gasbag weight-measuring apparatus of any of the preceding claims, wherein the gas-draining unit is a gas-draining pump.

## Patentansprüche

1. Gasbeutel-Gewichtsmessvorrichtung, umfassend:
einen Gasbeutel (20), die dünn und flach ist, wobei dieser ausgelegt ist, um einen Probenkörpers (14) anzuordnen oder abzustützen und mit einem Gas gefüllt werden kann;
einen Druckmesser (60), der ausgelegt ist, um den Druck des Gasbeutels zu messen und ein Drucksignal zu erzeugen;
eine Steuereinheit (40), die ausgelegt ist, um die Gewichtsdaten des Probenkörpers aus dem Drucksignal zu berechnen; und
eine Anzeige (50), die ausgelegt ist, die Gewichtsdaten des Probenkörpers anzuzeigen;
wobei ein rohrförmiges Element (12) mit dem Gasbeutel verbunden ist, welches ausgelegt ist, um die Gewichtsdaten des Probenkörpers (14) zu messen und anzuzeigen;
**dadurch gekennzeichnet, dass** die Gasbeutel-Gewichtsmessvorrichtung weiterhin eine Gasfüllungseinheit (30), die ausgelegt ist, um das Gas in den Gasbeutel zu pumpen, eine Gasentleerungseinheit (70), die ausgelegt ist, um das Gas aus dem Gasbeutel (20) in die Atmosphäre ablassen, und einen Schalter (16) zur Aktivierung der Gasbeutel-Gewichtsmessvorrichtung aufweist, wobei
die Gasfüllungseinheit (30), die Gasentleerungseinheit (70), der Druckmesser (60), die Steuereinheit (40) und die Anzeige (50) innerhalb des rohrförmigen Elements (12) angeordnet sind, und
die Steuereinheit ausgelegt ist, um den Betrieb der Gasfüllungseinheit, der Gasentleerungseinheit, des Druckmessers und der Anzeige durch Drücken des Schalters zu steuern.

2. Gasbeutel-Gewichtsmessvorrichtung nach Anspruch 1, wobei die Gasfüllungseinheit eine Gaspumpe ist.

3. Gasbeutel-Gewichtsmessvorrichtung nach einem der vorhergehenden Ansprüche, wobei die Gasentleerungseinheit ein elektromagnetisches Ventil ist.

4. Gasbeutel-Gewichtsmessvorrichtung nach einem der vorhergehenden Ansprüche, wobei der Druckmesser ausgelegt ist, um eine Druckdifferenz zu messen, die durch Anordnen des Probenkörpers auf dem Gasbeutel erzeugt wird.

5. Gasbeutel-Gewichtsmessvorrichtung nach einem der vorhergehenden Ansprüche, wobei die Anzeige eine Flüssigkristallanzeigetafel ist.

6. Gasbeutel-Gewichtsmessvorrichtung nach einem der vorhergehenden Ansprüche, wobei das rohrförmige Element (12) ein Zylinder ist.

7. Gasbeutel-Gewichtsmessvorrichtung nach einem der vorhergehenden Ansprüche, wobei der Gasbeutel ausgelegt ist, um auf das rohrförmige Element aufgerollt zu werden.

8. Gasbeutel-Gewichtsmessvorrichtung nach einem der vorhergehenden Ansprüche, wobei die Gasentleerungseinheit eine Gasentleerungspumpe ist.

## Revendications

1. Un appareil de mesure de poids doté d'un sac de gaz, comprenant :
un sac de gaz (20) mince et plat, configuré pour le placement ou le support d'un échantillon (14) et pouvant être rempli de gaz ;
une jauge de pression (60) configurée pour mesurer la pression du sac de gaz et générer un signal de pression ;
une unité de commande (40) configurée pour calculer la valeur du poids de l'échantillon à partir du signal de pression ; et
un affichage (50) configuré pour afficher la valeur du poids de l'échantillon;
dans lequel un élément tubulaire (12) est relié au sac de gaz, qui est configuré pour mesurer et afficher la valeur du poids de l'échantillon (14) ;
**caractérisé en ce que** ledit appareil de mesure de poids doté d'un sac de gaz comporte en outre une unité de remplissage de gaz (30) configuré pour pomper ledit gaz à l'intérieur du sac de gaz, une unité de drainage de gaz (70) configurée pour drainer le gaz depuis le sac de gaz (20) vers l'atmosphère et un commutateur (16) pour activer l'appareil de mesure de poids doté d'un sac de gaz, dans lequel
ladite unité de remplissage de gaz (30), ladite unité de drainage de gaz (70), ladite jauge de pression (60), ladite unité de commande (40) et ledit affichage (50) sont positionnés à l'intérieur de l'élément tubulaire (12), et
dans lequel ladite unité de commande est configurée pour commander le fonctionnement de l'unité de remplissage de gaz, de l'unité de drainage de gaz, de la jauge de pression et de l'affichage au moyen d'une pression sur ledit commutateur.

2. L'appareil de mesure de poids doté d'un sac de gaz de la revendication 1, dans lequel l'unité de remplissage de gaz est une pompe à gaz.

3. L'appareil de mesure de poids doté d'un sac de gaz selon l'une quelconque des revendications précédentes, dans lequel l'unité de drainage de gaz est une vanne électromagnétique.

4. L'appareil de mesure de poids doté d'un sac de gaz selon l'une quelconque des revendications précédentes, dans lequel la jauge de pression est configurée pour mesurer une différence de pression générée par la disposition de l'échantillon sur le sac de gaz.

5. L'appareil de mesure de poids doté d'un sac de gaz selon l'une quelconque des revendications précédentes, dans lequel l'affichage est un affichage à cristaux liquides.

6. L'appareil de mesure de poids doté d'un sac de gaz selon l'une quelconque des revendications précédentes, dans lequel ledit élément tubulaire (12) est un cylindre.

7. L'appareil de mesure de poids doté d'un sac de gaz selon l'une quelconque des revendications précédentes, dans lequel le sac de gaz est configuré pour pouvoir rouler sur l'élément tubulaire.

8. L'appareil de mesure de poids doté d'un sac de gaz selon l'une quelconque des revendications précédentes, dans lequel l'unité de drainage de gaz est une pompe de drainage de gaz,
